# EUROPÄISCHE PATENTSCHRIFT

(11) **EP 0 361 491 B1**
(45) Veröffentlichungstag und Bekanntmachung des Hinweises auf die Patenterteilung: **04.05.1994**
(21) Anmeldenummer: 89118020.0
(22) Anmeldetag: 29.09.1989
(51) Int. Cl.: G07F 7/10

(54) **Verfahren zur Programmierung von Chipkarten**
Method for programming chip cards
Méthode pour programmer des cartes à puce

(30) Priorität: 30.09.1988 DE 3833241
(43) Veröffentlichungstag der Anmeldung: 04.04.1990
(73) Patentinhaber: Orga-Kartensysteme GmbH, 33102 Paderborn (DE)
(72) Erfinder: Milczewsky, Klaus, Dipl. Ing., W-6101 Rossdorf (DE)
(74) Vertreter: Linser, Heinz

(56) Entgegenhaltungen:
- EP-A- 0 152 024

## Beschreibung

Die Erfindung betrifft ein Verfahren der Programmierung einer Chipkarte für mehrere Anwendungen, welche mehrere nichtflüchtig beschreibbare Speicherbereiche beinhaltet, wobei alle Speicherbereiche gegen Beschreiben gesichert sind.

Aus der EP-A-0152024 ist eine Chipkarte bekannt, deren Speicher in verschiedene Zonen aufgeteilt ist. Ein im Chip befindlicher Zugangscontroller wird vor der Ausgabe der Karte entsprechend programmiert, so daß der Zugang bzw. die Zugangserlaubnis zu verschiedenen Zonen festgelegt wird. Damit kann eine Auswahl von Personen Zugang zu bestimmten Terminals erhalten. Derartige Chipkarten werden vor ihrem ersten Gebrauch für die vorgesehenen Anwendungsbereiche erschlossen, indem in die für diese Bereiche vorgesehenen Speicher der Chips Anwenderroutinen geladen werden.

Eine Änderung der Anwendungsmöglichkeiten der Chipkarten ist nicht erwähnt.

Die Problematik des Herstellers oder der Kartenausgabestelle dieser Karten besteht also darin, daß in der Regel nicht bekannt ist, welche Anwendungen vom Karteninhaber im Laufe der Dauer der Nutzung der jeweiligen Karte sich ändern können.

Bei einer Veränderung und/oder Erweiterung der Anwendungsbereiche durch den Karteninhaber muß eine neue Chipkarte gefertigt und programmiert werden.

Der Erfindung liegt die Aufgabe zugrunde, ein Verfahren anzugeben, mit dem die Karten auch nach einer Erstprogrammierung geändert oder weiteren neuen Anwendungsbereichen zugänglich gemacht werden können, ohne daß dies der Sicherheit der Karten abträglich ist.

Die Lösung dieser Aufgabe besteht darin, daß nur die Speicherbereiche, die für die mehreren Anwendungen benötigt werden, beschrieben werden, und daß nur eine Kontrollinstanz den Speicherbereichen zugeordnete Kontroll-Flags aufheben kann und einzelne Speicherbereiche neu beschreiben oder löschen kann.

Weitere vorteilhafte Ausgestaltungen dieser Erfindung sind in den Unteransprüchen näher gekennzeichnet.

Der Kartenherausgeber, bzw. die Stelle, bei der die Karte erstmals "personalisiert" wird, verfügt in der Regel über ein Instrumentarium (kryptologische Funktionen), um Verwaltungsfunktionen mit der Karte auszuführen. Dieses kann auch für die Kontrolle der Ladbarkeit neuer Anwendungen verwendet werden.

Der eigentliche Mechanismus besteht darin, daß der Kartenherausgeber (bzw. eine Kontrollinstanz) in einer Anwendung, die bei der Erstpersonalisierung in die Karte programmiert wird, ein Kontroll-Flag für diese und jede mögliche nachladbare Anwendung setzt.

Dieses Kontroll-Flag ist der eigentliche Bestandteil des Mechanismus. Es kann nur durch den Kartenherausgeber (bzw. eine Kontrollinstanz) und mit dessen Verwaltungsfunktionen in den "nachladen erlaubt" -Zustand gesetzt werden. Danach ist das Laden der gewünschten Anwendungen möglich. Durch die Programmierung dieser Anwendungen wird das Kontroll-Flag zurückgesetzt.

Ein weiteres Überschreiben des nun einprogrammierten Programms ist nicht möglich. Auch das einmalige programmieren kann zusätzlich mit einer Schutzfunktion abgesichter sein, die jedoch unabhängig von der Verwaltungsfunktion der Kartenherausgeber (bzw. der Kontrollinstanz) sein sollte, um die Sicherheitsverantwortung für die gesamte Karte immer beim Kartenherausgeber (bzw. der Kontrollinstanz) zu belassen.

Der Kartenherausgeber (bzw. die Kontrollinstanz) kontrolliert somit stets wieviele Anwendungen auf der Karte insgesamt eingebracht werden und verfügt über das Wissen, welche Karten überhaupt für die Einbringung vorbereitet wurden.

Es ist nach diesem Mechanismus möglich, die Karte zunächst nur mit einer Anwendung zu produzieren, aber auf Wunsch des Kartenbesitzers später, mittels der Verwaltungsfunktionen für die Einbringung einer zusätzlichen Anwendung zu aktivieren. Auch ein Mechanismus zum Löschen eines Anwendungsbereichs, der ebenfalls über die Verwaltungsfunktion abgesichert sein sollte, ist hierdurch denkbar und sinnvoll, um größtmögliche Flexibilität zu gewährleisten.

Wichtig für die Sicherheitskonzeption einer solchen Multifunktionskarte ist, daß stets der Herausgeber der Karte (bzw. die Kontrollinstanz) die Kontrolle über die Einbringung aller Anwendungen auf die Karte besitzt, und somit das jeweilige Sicherheitskonzept für die jeweilige Kartenverwaltung völlig unabhängig von der Programmierung der verschiedenen Anwendungen bleibt.

## Patentansprüche

1. Verfahren der Programmierung einer Chipkarte für mehrere Anwendungen, welche mehrere nichtflüchtig beschreibbare Speicherbereiche beinhaltet, wobei alle Speicherbereiche gegen Beschreiben gesichert sind, **dadurch gekennzeichnet, daß** nur die Speicherbereiche, die für die mehreren Anwendungen benötigt werden, beschrieben werden, und daß nur eine Kontrollinstanz den Speicherbereichen zugeordnete Kontroll-Flags aufheben kann und einzelne Speicherbereiche neu beschreiben oder löschen kann.

2. Verfahren nach Anspruch 1, **dadurch gekennzeichnet, daß** eine kryptologische Funktion zur Aufhebung und zum Setzen der Kontroll-Flags dient.

3. Verfahren nach Anspruch 1, **dadurch gekennzeichnet, daß** anhand der Kontroll-Flags erkannt wird, für welche Anwendungsbereiche die Chipkarte erschlossen ist.

4. Verfahren nach Anspruch 1, 2 oder 3, **dadurch gekennzeichnet, daß** die Kontrollinstanz eine Kartenausgabestelle ist.

## Claims

1. A method for programming a chip card for several applications containing several memory areas that may be permanently overwritten, whereby all memory areas are write-protected, characterised in that only the memory areas that are required for the several applications are written to and in that only a controlling body can raise the control flags assigned to those memory areas and overwrite or delete individual memory areas.

2. A method in accordance with claim 1, characterised in that a cryptological function is used to raise and insert the control flags.

3. A method in accordance with claim 1, characterised in that the application areas for which the chip card has been programmed may be recognised by means of the control flags.

4. A method in accordance with claim 1, 2 or 3, characterised in that the controlling body is a card issuer.

## Revendications

1. Procédé de programmation d'une carte à circuit intégré à usages multiples, qui contient plusieurs zones de mémoire d'écriture non volatile, dans laquelle toutes les zones mémoire sont protégées contre l'écriture, caractérisé en ce que seules les zones mémoire qui sont nécessaires pour les usages multiples sont écrites, et en ce que seule une instance de contrôle peut supprimer les indicateurs de contrôle associés aux zones mémoire et réécrire ou effacer des zones mémoire individuelles.

2. Procédé selon la revendication 1, caractérisé en ce qu'une fonction de cryptage sert à supprimer et à placer les indicateurs de contrôle.

3. Procédé selon la revendication 1, caractérisé en ce qu'on reconnaît au moyen des indicateurs de contrôle à quel domaine d'application la carte à circuit intégré est destinée.

4. Procédé selon la revendication 1, 2 ou 3, caractérisé en ce que l'instance de contrôle est un poste de contrôle de cartes.
